# EUROPEAN PATENT APPLICATION

(11) **EP 4 729 576 A1**
(43) Date of publication of application: **22.04.2026**
(21) Application number: 25192083.1
(22) Date of filing: 28.07.2025
(51) Int. Cl.: C08L 23/0861, C08L 23/0869

(54) **POLYMER BLEND COMPOSITION**

(30) Priority: 17.10.2024 KR 20240142202; 30.05.2025 KR 20250071502
(71) Applicant: SK Innovation Co., Ltd., Seoul 03188 (KR); SK Geo Centric Co., Ltd., Seoul 03188 (KR)
(72) Inventor: HWANG, Bu Yeon, 34124 Daejeon (KR); SON, Sang Ha, 34124 Daejeon (KR); LEE, Sang Yeup, 34124 Daejeon (KR); WOO, Dong Hyun, 34124 Daejeon (KR)
(74) Representative: Lorenz Seidler Gossel Part. mbB

(57) **Abstract**

A polymer blend composition according to exemplary embodiments includes an ethylene vinyl alcohol polymer, and an ethylene (meth)acrylic acid polymer including a (meth)acrylic acid in a content of 1 wt% or more and less than 10 wt%. A polymer blend composition having improved processability and barrier properties may be provided. In addition, polymer pellets and/or a polymer film having improved barrier properties may be provided.

## Description

### [BACKGROUND OF THE INVENTION]

### 1. Field of the Invention

The present disclosure relates to a polymer blend composition, and more specifically, to a polymer blend composition which includes copolymers.

### 2. Description of the Related Art

Recently, a barrier utilizing a polymer material has been applied in various fields. In order to satisfy properties required in each technical field, barriers made of different types of polymers such as polyamide (PA), polyethylene terephthalate (PET), polyvinyl alcohol (PVA), and the like are being used.

An ethylene vinyl alcohol copolymer (EVOH) can be utilized as a barrier material due to gas barrier properties, transparency, etc. thereof. However, since the EVOH has low processability and elongation, gas barrier properties may not be implemented due to damages occurring during the processing. In addition, due to low thermal stability of the EVOH, it is difficult to secure uniformity of the barrier, for example, there are fish-eyes occurred thereon, etc.

In order to supplement the problems entailed in the EVOH, research on a polymer blend in which two or more polymers are mixed is being conducted. Depending on the level of mixing, the polymer blends may be classified into a compatible polymer blend in which polymers are mixed at a molecular level, an incompatible polymer blend in which polymers are mixed while maintaining each phase, and a partially compatible polymer blend which have both compatibility and incompatibility.

Depending on the characteristics of the polymers, the properties may be decreased, or the phases may be separated during a mixing process of components. For example, phase separation may occur during a blending process of the EVOH with a nonpolar polymer (e.g., polyethylene (PE)) due to the polarities thereof.

### [SUMMARY OF THE INVENTION]

An object of the present disclosure is to provide a polymer blend composition having improved processability.

Another object of the present disclosure is to provide a polymer pellet which includes the polymer blend composition having improved processability and stability.

In addition, an object of the present disclosure is to provide a polymer film which includes the polymer blend composition having improved processability and stability.

To achieve the above objects, according to an aspect of the present disclosure, there is provided a polymer blend composition including: an ethylene vinyl alcohol polymer, and an ethylene (meth)acrylic acid polymer which includes a (meth)acrylic acid in a content of 1% by weight or more and less than 10% by weight.

According to exemplary embodiments, the content of the (meth)acrylic acid in the ethylene (meth)acrylic acid polymer may be 5% by weight or more and less than 10% by weight.

According to exemplary embodiments, a difference in a melt index between the ethylene vinyl alcohol polymer and the ethylene (meth)acrylic acid polymer may be 10 g/10 min or less preferably 7 g/10 min or less.

According to exemplary embodiments, the ethylene (meth)acrylic acid polymer may have a melt index of 0.1 g/10 min to 20 g/10 min, preferably 1 g/10 min to 15 g/10 min, more preferably 3 g/10 min to 12 g/10 min, yet more preferably 5 g/10 min to 10 g/10 min.

According to exemplary embodiments, the ethylene vinyl alcohol polymer may have a melt index of 0.1 g/10 min to 10 g/10 min, preferably 0.8 g/10 min to 5 g/10 min, more preferably 1 g/10 min to 4 g/10 min.

According to exemplary embodiments, the ethylene (meth)acrylic acid polymer may have a weight average molecular weight of 50,000 g/mol to 150,000 g/mol.

According to exemplary embodiments, the ethylene (meth)acrylic acid polymer may have a weight average molecular weight of 90,000 g/mol to 120,000 g/mol.

According to exemplary embodiments, the content of the ethylene (meth)acrylic acid polymer may be 5% by weight or more and less than 40% by weight preferably 8% by weight or more and less than 32% by weight based on a total weight of the polymer blend composition.

According to exemplary embodiments, a content ratio of the ethylene (meth)acrylic acid polymer relative to the ethylene vinyl alcohol polymer may be in a range from 0.7 to 2.

According to exemplary embodiments, the polymer blend composition may further include an additive which includes a basic inorganic compound.

According to exemplary embodiments, a content of the additive may be 0.01% by weight or more and less than 3.0% by weight, preferably 0.02% by weight or more and less than 2.0% by weight, preferably 0.05% by weight or more and less than 1.0% by weight based on a total weight of the ethylene vinyl alcohol polymer and the ethylene (meth)acrylic acid polymer.

According to exemplary embodiments, the polymer blend composition may further include a compatibilizer which includes one or more of a polyolefin polymer, a (meth)acrylate polymer, a polymer grafted with maleic anhydride and maleic anhydride.

According to exemplary embodiments, a content of the compatibilizer may be 0.1% by weight or more and less than 10% by weight, preferably 0.5% by weight or more and less than 7% by weight based on a total weight of the ethylene vinyl alcohol polymer and the ethylene (meth)acrylic acid polymer.

According to exemplary embodiments, a content of ethylene in the ethylene vinyl alcohol polymer may be 15 mol% to 50 mol%.

According to another aspect of the present disclosure, there is provided a polymer pellet including the polymer blend composition according to the above-described exemplary embodiments.

In addition, according to another aspect of the present disclosure, there is provided a polymer film including a polymer blend composition according to the above-described exemplary embodiments.

The polymer blend composition according to the present disclosure may include an ethylene vinyl alcohol polymer and an ethylene (meth)acrylic acid polymer including (meth)acrylic acid in a content corresponding to a predetermined range. Accordingly, the polymer blend composition may have improved processability. A barrier formed through the polymer blend composition may have improved stability.

According to exemplary embodiments, a difference in the melt index between the ethylene vinyl alcohol polymer and the ethylene (meth)acrylic acid polymer may correspond to a predetermined range. Accordingly, the polymers may be mixed more uniformly, such that the processability may be improved.

### [DETAILED DESCRIPTION OF THE INVENTION]

The embodiments of the present disclosure provide a polymer blend composition which includes an ethylene vinyl alcohol polymer (hereinafter, may be abbreviated as an "EVOH polymer") and an ethylene (meth)acrylic acid polymer (hereinafter, may be abbreviated as an "EA polymer"). In addition, a polymer pellet and a polymer film, which include the polymer blend composition, are provided.

As used herein, the term "X compound" or "X polymer" may refer to a compound or polymer having an X structure. For example, the EVOH polymer may refer to a polymer including an ethylene vinyl alcohol structure (-(CH₂)₂-CH(OH)CH₂-). For example, the EVOH polymer may include a compound including an ethylene vinyl alcohol structure and one or more substituents.

As used herein, the term "(meth)acrylic acid" may refer to "methacrylic acid (MAA)," "acrylic acid (AA)," or both of them. The term "(meth)acrylate" may refer to methacrylate, acrylate, or both of them.

Hereinafter, the present disclosure will be described in more detail.

The polymer blend composition includes an EVOH polymer. The EVOH polymer may reduce gas permeability of the polymer blend composition and improve mechanical properties such as a tensile strength and impact strength, etc., to implement barrier properties.

The EVOH polymer may include ethylene repeating units and vinyl alcohol repeating units. The EVOH polymer may further include other polymer repeating units, or may include ethylene repeating units and/or vinyl alcohol repeating units substituted with functional groups. For example, the EVOH polymer may further include vinyl acetate repeating units, propylene repeating units, etc.

The EVOH polymer includes an ethylene vinyl alcohol copolymer. In some embodiments, the EVOH polymer may be substantially composed of an ethylene vinyl alcohol copolymer.

For example, the EVOH polymer may include a repeating unit represented by Formula 1 below.

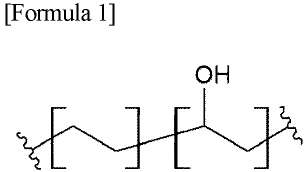

In Formula 1, the number of ethylene repeating units and vinyl alcohol repeating units may be determined in consideration of a weight average molecular weight and/or melt index of the EVOH polymer.

According to exemplary embodiments, a content of ethylene in the EVOH polymer may be 15 mol% to 50 mol%. For example, the content of ethylene in the EVOH polymer may be 15 mol% to 50 mol%, and a content of vinyl alcohol may be 50 mol% to 85 mol%.

In some embodiments, the content of ethylene in the EVOH polymer may be 20 mol% to 45 mol%, 22 mol% to 42 mol%, 25 mol% to 40 mol%, or 27.5 mol% to 37.5 mol%.

A mixing property of the EVOH polymer including ethylene within the above range and the EA polymer including (meth)acrylic acid in a predetermined content range may be improved.

The content of the ethylene may represent a content of ethylene repeating units, and may be measured by a method (e.g., NMR, FTIR, GPC, etc.) known in the art.

According to exemplary embodiments, the EVOH polymer may have a weight average molecular weight of 10,000 g/mol to 200,000 g/mol, 30,000 g/mol to 150,000 g/mol, or 40,000 g/mol to 100,000 g/mol.

Within the above range, a decrease in the mechanical properties that can occur in a process of forming a polymer blend may be suppressed.

The weight average molecular weight, for example, refers to values as measured by gel permeation chromatography according to ASTM D5296. Standards and solvents are selected appropriately and can be, for example, 1,2,4- trichlorobenzene (TCB) solvent (160°C) and polystyrene standards.

According to exemplary embodiments, the EVOH polymer may have a melt index of 0.1 g/10 min to 10 g/10 min.

In some embodiments, the EVOH polymer may have a melt index of 0.3 g/10 min to 8 g/10 min, 0.5 g/10 min to 7 g/10 min, 0.7 g/10 min to 6 g/10 min, 0.8 g/10 min to 5 g/10 min, 0.9 g/10 min to 4.5 g/10 min, or 1 g/10 min to 4 g/10 min.

Within the above range, a difference in the melt index between the EVOH polymer and the EA polymer may be maintained within a predetermined range. Accordingly, the mixing of the EVOH polymer with the EA polymer may be promoted to improve the uniformity of appearance and gas barrier properties of a barrier (e.g., a coating or film) formed using the polymer blend composition.

The melt index, for example, refers to the melt index measured according to the ASTM D1238 (190°C, 2,16 kg). The unit of the melt index is g/10 min, which may represent an amount of molten polymer that flowed for 10 minutes.

The polymer blend composition includes an EA polymer. The EA polymer may improve the processability, appearance properties, manufacturing efficiency, and/or moisture barrier properties of the polymer blend composition. In some embodiments, the polymer blend composition may include an ethylene acrylic acid (EAA) polymer.

For example, the EA polymer may form a polymer blend composition according to a reaction with the EVOH polymer. Thereby, the EVOH polymer and the EA polymer may be uniformly mixed to improve barrier properties and processability together.

The EA polymer may include ethylene repeating units and (meth)acrylic acid repeating units. The EA polymer may further include other polymer repeating units, or may include ethylene repeating units and/or vinyl alcohol repeating units substituted with functional groups. For example, the EA polymer may include an ionomer formed by ionically bonding the (meth)acrylic acid repeating units with metals. For example, the EA polymer may further include acrylate repeating units, propylene repeating units, etc.

The EA polymer includes an ethylene (meth)acrylic acid copolymer. In some embodiments, the EA polymer may be substantially composed of an ethylene (meth)acrylic acid copolymer.

For example, the EA polymer may include a repeating unit represented by Formula 2 below or a repeating unit represented by Formula 3 below.

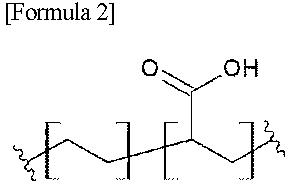

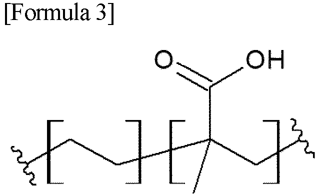

In Formulas 2 and 3, the number of ethylene repeating units and (meth)acrylic acid repeating units may be determined in consideration of the weight average molecular weight and/or melt index of the EA polymer.

The EA polymer includes acrylic acid, and a content of the acrylic acid is 1% by weight ("wt%") or more and less than 10 wt%. For example, the content of the acrylic acid in the EA polymer is 1 wt% or more and less than 10 wt%, and the content of the ethylene may be greater than 90 wt% and 99 wt% or less.

In some embodiments, the EA polymer includes acrylic acid, and a content of the acrylic acid may be 3 wt% or more and less than 10 wt%, 3.5 wt% or more and less than 10 wt%, 4 wt% or more and less than 10 wt%, 5 wt% or more and less than 10 wt%, 5.5 wt% to 9.9 wt%, or 6 wt% to 9.8 wt%.

In one embodiment, the EA polymer may also include methacrylic acid. In one embodiment, a content of the methacrylic acid in the EA polymer may be 1 wt% to 12 wt%. In some embodiments, the content of the methacrylic acid may be 1.2 wt% to 12 wt%, 3.5 wt% to 12 wt%, 4.5 wt% to 11.9 wt%, or 7 wt% to 11.8 wt%.

Within the above range, the polymer blend composition may have the improved processability. For example, if the content of (meth)acrylic acid is increased out of the above range, dispersibility may be reduced due to excessive reaction with the EVOH polymer, and agglomeration may occur during the processing. Alternatively, the dispersibility may not be secured, such that the processing may not be possible. For example, if the content of (meth)acrylic acid is reduced out of the above range, the number of gel-fish-eyes may be increased and the mechanical strength may be decreased, such that barrier properties may not be implemented.

The content of the acrylic acid or methacrylic acid, for example, represents the content of acrylic acid repeating units or methacrylic acid repeating units, respectively, as measured according to ASTM D4094.

In some embodiments, the content of acrylic acid in the EA polymer including acrylic acid may be greater than the content of methacrylic acid in the EA polymer including methacrylic acid. For example, a polymer including acrylic acid or a polymer including methacrylic acid may be used as the EA polymer, and the content of methacrylic acid in the polymer including methacrylic acid may be about 10% to 30% greater than the content of acrylic acid in the polymer including acrylic acid. Accordingly, a polymer blend composition having designed properties may be prepared.

According to exemplary embodiments, the EA polymer may have a weight average molecular weight of 50,000 g/mol to 150,000 g/mol.

In some embodiments, the EA polymer may have a weight average molecular weight of 70,000 g/mol to 140,000 g/mol, 75,000 g/mol to 135,000 g/mol, 80,000 g/mol to 130,000 g/mol, 85,000 g/mol to 125,000 g/mol, or 90,000 g/mol to 120,000 g/mol.

Within the above range, the dispersibility of the EA polymer is secured, such that improved processability and mechanical properties may be implemented. In addition, a decrease in the barrier properties of the EVOH polymer may be suppressed.

According to exemplary embodiments, the EA polymer may have a melt index of 0.1 g/10 min to 20 g/10 min.

In some embodiments, the EA polymer may have a melt index of 0.3 g/10 min to 17 g/10 min, 0.5 g/10 min to 15 g/10 min, 0.6 g/10 min to 12 g/10 min, 0.7 g/10 min to 10 g/10 min, 0.8 g/10 min to 9 g/10 min, 0.9 g/10 min to 8 g/10 min, 1 g/10 min to 7 g/10 min, 1 g/10 min to 15 g/10 min, 3 g/10 min to 12 g/10 min, or 5 g/10 min to 10 g/10 min.

Within the above range, flowability of the polymer blend composition by the EA polymer may be secured. Accordingly, the polymer blend composition may have the improved processability.

The melt index may be measured by the method known in the art as described above.

By adjusting the difference in the melt index between the EVOH polymer and the EA polymer, improved barrier properties (e.g., uniformity of appearance, gas barrier properties, moisture barrier properties, mechanical stability, etc.) and processability may be implemented together.

According to exemplary embodiments, the difference in the melt index between the EVOH polymer and the EA polymer may be 10 g/10 min or less.

In some embodiments, the difference in the melt index between the EVOH polymer and the EA polymer may be 8 g/10 min or less, 7 g/10 min or less, 6 g/10 min or less, 5 g/10 min or less, 4.5 g/10 min or less, 4 g/10 min or less, 3.5 g/10 min or less, or 3 g/10 min or less.

A lower limit of the difference in the melt index between the EVOH polymer and the EA polymer is not limited, but may be, for example, 0.01 g/10 min or more, or 0.1 g/10 min or more.

Within the above range, the polymer blend composition may have the improved processability. For example, when the difference in the melt index exceeds the above range, the reaction between the EVOH polymer and the EA polymer is increased, such that the polymer blend composition may be aggregated. Accordingly, even if adding an additive, a compatibilizer, etc., dispersibility is not secured, and thus it may be impossible to process the polymer blend composition.

According to exemplary embodiments, the content of the EA polymer may be 5 wt% or more and less than 40 wt% based on a total weight of the polymer blend composition.

In some embodiments, the content of the EA polymer may be 7 wt% to 38 wt%, 7.5 wt% to 35 wt%, 8 wt% to 32 wt%, or 10 wt% to 30 wt% based on the total weight of the polymer blend composition.

Within the above range, improved barrier properties and processability may be implemented together.

The content of the EA polymer may vary depending on the introduction of the additive and/or compatibilizer to be described below.

According to exemplary embodiments, when the polymer blend composition includes one or more of the additive and the compatibilizer, the content of the EA polymer may be 5 wt% or more and less than 60 wt%, 5 wt% to less than 55 wt%, or 5 wt% or more to 50 wt% or less based on the total weight of the polymer blend composition.

Even if the content of the EA polymer is increased due to the additive and/or compatibilizer, improved barrier properties and processability may be implemented together.

The content of the EA polymer may also be described based on the total weight of the EVOH polymer and the EA polymer. For example, when further including an additive (e.g., a basic compound or organic compound) other than the EVOH polymer and the EA polymer, the content of the EA polymer may be described based on the total weight of the EVOH polymer and the EA polymer except for the content of the additive.

The content of the EVOH polymer may depend on the content of the EA polymer. For example, if the content of the EA polymer is 5 wt% or more and less than 40 wt% based on the total weight of the polymer blend composition, the content of the EVOH polymer may be greater than 60 wt% and less than 95 wt% based on the total weight of the polymer blend composition.

According to exemplary embodiments, the polymer blend composition may further include one or more of an additive and a compatibilizer.

For example, the additive may include a plasticizer, a viscosity stabilizer, a hydrolysis stabilizer, an antioxidant, an ultraviolet absorber, an antistatic agent, a coloring agent, a filler, a flame retardant, a lubricant, a reinforcing agent, an antiblocking agent, a release agent, a foaming agent, a slip agent, a processing aid, etc.

According to exemplary embodiments, the additive may include a basic inorganic compound. The basic inorganic compound may be included as the plasticizer and/or processing aid.

The basic inorganic compound may stabilize the instability of the melt viscosity occurring during the melting process of the polymer blend composition, and suppress side reactions.

Examples of the basic inorganic compound may include calcium oxide (CaO), calcium carbonate (CaCO₃), calcium hydroxide (Ca(OH)₂), zinc oxide (ZnO), zinc carbonate (ZnCO₃), magnesium oxide (MgO), magnesium carbonate (MgCO₃), aluminum hydroxide (Al(OH)₂), barium hydroxide (Ba(OH)₂), lithium hydroxide (LiOH), potassium hydroxide (KOH), etc.

According to exemplary embodiments, the additive may also include a basic organic compound.

Examples of the basic organic compound may include isopropylamine, trimethylamine, triethylamine, tributylamine, benzylamine, dimethylbenzylamine, ethylenediamine, tetraethylammonium bromide, tetraethylammonium chloride, tetrabutylammonium bromide, pyridine, piperidine, piperazine, etc.

Since the additive has basicity, it may improve the compatibility of the EA polymer having acidity under melt processing conditions. In addition, it may suppress a side reaction and adjust a crosslinking structure to improve the physical strength and chemical resistance of the polymer blend composition.

In some embodiments, the additive may not include a ceramic additive. The ceramic additive may represent a naturally formed mineral. For example, the ceramic additive may include talc, mica, kaolin, clay, wollastonite, silica, quartz, etc.

The ceramic additive may increase a stiffness of the EVOH polymer, thereby reducing the processability of the polymer blend composition.

In some embodiments, the content of the additive may be 0.01 wt% or more and less than 3.0 wt% based on the total weight of the EVOH polymer and the EA polymer.

In some embodiments, the content of the additive may be 0.02 wt% to 2.0 wt%, 0.05 wt% to 1.5 wt%, 0.05 wt% to 1.0 wt%, 0.07 wt% or more and less than 1.0 wt%, 0.09 wt% to 0.8 wt%, or 0.1 wt% to 0.5 wt% based on the total weight of the EVOH polymer and the EA polymer.

Within the above range, the processability may be improved while maintaining the barrier properties.

The compatibilizer may improve compatibility between the EVOH polymer and the EA polymer. Accordingly, it is possible to suppress phase separation due to coagulation, gelation, and/or over-reaction caused by mixing the EVOH polymer with the EA polymer.

The compatibilizer may include a polymer and/or compound that can physically and chemically react with the EVOH polymer and the EA polymer. For example, the compatibilizer may include a physical compatibilizer, a chemical compatibilizer, etc.

For example, the compatibilizer may include a polyolefin polymer such as polyethylene, polypropylene, polybutylene, etc.; a (meth)acrylate compound such as methyl acrylate, ethyl acrylate, butyl acrylate, ethyl methacrylate, glycidyl methacrylate, etc.; a (meth)acrylate polymer such as ethylene methyl acrylate, ethylene ethyl acrylate, ethylene butyl acrylate, propylene butyl acrylate, butylene ethyl acrylate, ethylene glycidyl methacrylate, etc.; maleic anhydride, etc.; a maleic anhydride polymer such as maleic anhydride grafted ethylene propylene rubber, maleic anhydride grafted polypropylene, etc.; an ethylene-alkyl (meth)acrylate-(meth)acrylic acid copolymer, an ethylene-vinylacetate copolymer, etc.

According to exemplary embodiments, the compatibilizer may include one or more of a polyolefin polymer, a (meth)acrylate polymer, a polymer grafted with maleic anhydride and maleic anhydride.

In some embodiments, the polyolefin polymer may include one or more of polyethylene, polypropylene and polybutylene.

In some embodiments, the (meth)acrylate polymer may include an alkyl (meth)acrylate polymer. The alkyl (meth)acrylate polymer may represent a polymer including alkylene repeating units and (meth)acrylate repeating units. The alkylene repeating unit may have 1 to 5 carbon atoms, and the (meth)acrylate repeating unit may have 1 to 10 carbon atoms. For example, the (meth)acrylate polymer may include ethylene-glycidyl methacrylate.

In some embodiments, the polymer grafted with maleic anhydride may represent a polymer in which maleic anhydride is grafted on the polyolefin polymer and/or the alkyl (meth)acrylate polymer.

In one embodiment, the compatibilizer may include one or more of the polymer grafted with maleic anhydride and maleic anhydride.

The above-described type of compatibilizer may improve an interfacial interaction between the EVOH polymer and the EA polymer, and assist in a chemical bonding between the polymers. Accordingly, the processability and mechanical properties of the polymer blend composition may be improved.

According to exemplary embodiments, a content of the compatibilizer may be 0.1 wt% or more and less than 10 wt% based on the total weight of the EVOH polymer and the EA polymer.

In some embodiments, the content of the compatibilizer may be 0.2 wt% to 9 wt%, 0.5 wt% to 7 wt%, 0.7 wt% to 6 wt%, or 1 wt% to 5 wt% based on the total weight of the EVOH polymer and the EA polymer.

Within the above range, excessive reaction of the EA polymer with the EVOH polymer may be suppressed, thereby improving the processability.

The polymer pellets according to embodiments of the present disclosure may include the polymer blend composition according to the above-described embodiments.

The polymer pellets may be prepared from the polymer blend composition according to the above-described embodiments described above. The polymer pellets may be formed with the improved processability of the polymer blend composition according to the above-described embodiments.

For example, the polymer pellets may be prepared by extruding the above-described polymer blend composition. The extrusion method is not limited, but the above-described polymer blend composition may be extruded through single extrusion, double extrusion, disperse extrusion, and the like, for example.

The easiness of operation (e.g., easiness of long-term storage, transport) may be improved through the polymer pellets.

The polymer film according to the embodiments of the present disclosure may include the polymer blend composition according to the above-described embodiments.

The polymer film may be manufactured from the polymer blend composition according to the above-described embodiments. The polymer film may also be manufactured from the polymer pellets according to the above-described embodiments.

For example, the polymer pellets may be extruded to manufacture the polymer film. The uniformity of the polymer films manufactured from the polymer pellets may be improved, thereby reducing the defect rate.

The barrier properties of the polymer film including the polymer blend composition according to the above-described embodiments may be improved. The barrier properties may include gas barrier properties to block penetration of oxygen, carbon dioxide, water vapor, etc.; chemical stability to suppress a reaction with an external compound; thermal stability to suppress changes due to heat, ultraviolet rays, etc.; mechanical stability to exhibit resistance against physical impacts such as a tensile strength, impact strength, etc.; uniformity due to a reduction in impurities, etc. When one or more of the above-described properties is improved, it can be seen that the barrier properties are improved.

According to exemplary embodiments, the polymer film may have a thickness of 1 µm to 100 µm. The thickness of the polymer film may be adjusted depending on the required barrier properties and the application technical field.

According to exemplary embodiments, the polymer film may have a gas barrier property of 10 cc/m²·day or less, 9 cc/m²·day or less, 8 cc/m²·day or less, 7.5 cc/m²·day or less, 7 cc/m²·day or less, 6.8 cc/m²·day or less, or 6 cc/m²·day or less.

A lower limit of the gas barrier property of the polymer film is not limited, but may be 0.05 cc/m²·day or more, or 0.1 cc/m²·day or more, for example.

For example, the gas barrier property may represent an oxygen barrier property.

For example, the gas barrier property may be a value expressed based on a thickness of 20 µm of the polymer film. In addition, the gas barrier property may represent a value measured according to the ISO 14663-2 anexC condition.

According to exemplary embodiments, gel and fish-eyes formed on the polymer film may be 9,000 or less per square meter (m²), 8,000 or less per square meter, or 7,000 or less per square meter.

The gel and the fish-eye may be, for example, defects formed on the film surface and/or inside, and may be measured by inspection of the film surface and/or inside.

The gel and the fish-eye may be measured using inspection equipment, such as an optical film defect analysis system, for example, and the measurement method is not limited thereto, and may include other appropriate optical inspection equipment or image analysis system.

As a non-limiting example, the gel and the fish-eye may be measured as follows.
(1) Supply of specimen: The polymer film specimen may be supplied to an ME20 type system of OCS (Optical Control Systems) GmbH.
(2) Optical inspection: Surface and internal defects of the film may be inspected using an optical device, etc. integrated into the ME20 system. At this time, FSA100 analysis software, etc. operated with the system may be used, and the sensitivity setting value may be set to, for example, 70.

The optical inspection may be performed based on, for example, the difference in intensity of light passing through or reflected from the film.
(3) Defect standard setting: Using the defect classification algorithm included in the FSA100 software, standard for the following multiple defect types may be set.
   (a) Gel: Opaque dot-shaped defects existing inside the film, which may be classified based on lightness difference, boundary irregularity, etc.
   (b) Fish-eye: Defects with a circular or concentric gloss difference that appear on the film surface, which may be classified based on reflectivity difference, boundary clarity, etc.
(4) Defect detection and counting: Based on optical data analyzed in real time through the FSA100 software, the total number of defects (the gel and the fish-eyes) with a diameter of 200 µm or less within the unit area (e.g., m²) of the film specimen may be detected and calculated.
For example, the diameter of individual defects may be measured through optical image analysis, and only defects that do not exceed the reference diameter (e.g., 200 µm) may be counted.

Hereinafter, experimental examples including specific examples and comparative examples are proposed to facilitate understanding of the present disclosure.

### Examples and Comparative Examples

Polymer blend compositions were prepared according to the components and contents described in Tables 1 to 3 below.

### Example 1

A polymer blend composition was prepared by melting 70 wt% of an ethylene vinyl alcohol copolymer (EVOH) including 32 mol% of ethylene and 30 wt% of an ethylene acrylic acid (EAA) copolymer including 9.7 wt% of acrylic acid, and mixing them using a mixer.

The acid content of EAA was measured by ASTM D4094, and the melt indices of EVOH and EAA were measured according to ASTM D1238 (ASTM D1238, 190°C, 2,16 kg). The EVOH had a melt index of 1.6 g/10 min, and the EAA had melt indices shown in Table 1.

### Examples 2 to 9

Polymer blend compositions were prepared in accordance with the same procedures described in Example 1, except that the acrylic acid content, melt index, and/or weight average molecular weight of the ethylene acrylic acid (EAA) copolymer were modified as shown in Table 1 below.

### Comparative Examples 1 to 2

Polymer blend compositions were prepared in accordance with the same procedures described in Example 1, except that the acrylic acid content, melt index, and/or weight average molecular weight of the ethylene acrylic acid (EAA) copolymer were modified as shown in Table 1 below.

### Examples 10 to 14

Polymer blend compositions were prepared in accordance with the same procedures described in Example 1, except that the contents of the ethylene vinyl alcohol copolymer (EVOH) and the ethylene acrylic acid (EAA) copolymer were modified as shown in Table 2 below.

### Comparative Examples 3 and 4

Polymer blend compositions were prepared in accordance with the same procedures described in Example 1, except that the contents of the ethylene vinyl alcohol copolymer (EVOH) and the ethylene acrylic acid (EAA) copolymer were modified as shown in Table 2 below.

### Examples 15 to 25

Additives and compatibilizers were added to the polymer blend compositions prepared in accordance with the same procedures described in Example 1 as shown in Table 3 below. The contents of the additives and compatibilizers were expressed based on 100 parts by weight of the EVOH and EAA mixture prior to the addition of the additives and compatibilizers.

**[TABLE 1]**

| Division | Ethylene acrylic acid (EAA) copolymer | | |
|---|---|---|---|
| | Acrylic acid content (wt%) | Melt index (g/10 min) | Molecular weight M_{w} (g/mol) |
| Example 1 | 9.7 | 1 | 110,000 - 120,000 |
| Example 2 | 9.7 | 5 | 95,000 - 105,000 |
| Example 3 | 9.7 | 10 | 90,000 - 100,000 |
| Example 4 | 9.7 | 20 | 70,000 - 80,000 |
| Example 5 | 6.5 | 2.5 | 110,000 - 120,000 |
| Example 6 | 6.5 | 5.5 | 100,000 - 110,000 |
| Example 7 | 6.5 | 7.5 | 95,000 - 105,000 |
| Example 8 | 6.5 | 9 | 80,000 - 90,000 |
| Example 9 | 3 | 11 | 120,000 - 130,000 |
| Comparative Example 1 | 14.5 | 55 | 50,000 - 60,000 |
| Comparative Example 2 | 20.5 | 300 | 30,000 - 40,000 |

**[TABLE 2]**

| Division | Ethylene vinyl alcohol copolymer (EVOH) content (wt%) | Ethylene acrylic acid (EAA) copolymer content (wt%) |
|---|---|---|
| Example 1 | 70 | 30 |
| Example 10 | 80 | 20 |
| Example 11 | 90 | 10 |
| Example 12 | 60 | 40 |
| Example 13 | 40 | 60 |
| Example 14 | 20 | 80 |
| Comparative Example 3 | 100 | - |
| Comparative Example 4 | - | 100 |

**[TABLE 3]**

| Division | Additive | | Compatibilizer | |
|---|---|---|---|---|
| | Type | Content (wt%) | Type | Content (wt%) |
| Example 1 | - | | - | |
| Example 15 | CaCO₃ | 0.1 | - | |
| Example 16 | CaCO₃ | 0.5 | - | |
| Example 17 | CaCO₃ | 1.0 | - | |
| Example 18 | Mica | 0.1 | - | |
| Example 19 | Talc | 0.1 | - | |
| Example 20 | - | | Ethylene-glycidyl methacrylate | 1 |
| Example 21 | - | | Maleic anhydride | 1 |
| Example 22 | - | | Maleic anhydride | 5 |
| Example 23 | - | | Maleic anhydride | 10 |
| Example 24 | - | | Melamine-formaldehyde | 1 |
| Example 25 | CaCO₃ | 0.1 | Maleic anhydride | 1 |

### Preparative Example

Polymer pellets were prepared by extruding the polymer blend composition through a twin extruder.

The polymer pellets were melt-extruded through a single extruder to manufacture a polymer film.

### Experimental Example

### (1) Analysis of oxygen transmission rate

An oxygen transmission rate of a polymer film having a thickness of 20 µm was analyzed under conditions of a temperature of 23°C and a relative humidity of 65%RH using an oxygen transmission rate measuring device (MOCON's OX-TRON).

### (2) Analysis of gel and fish-eye

The total number of gels and fish-eyes per unit area with a maximum diameter of 200 µm or less was evaluated using an ME20 type system from OCS (Optical Control Systems) GmbH for the polymer films. The total number of gels and fish-eyes per unit area was automatically calculated by the analysis software (FSA100) integrated with the system. The sensitivity was set to 70. The specific evaluation standards are as follows.
∘: Gel and fish-eyes are 7,000 or less per square meter
Δ: Gel and fish-eyes are greater than 7,000 per square meter and 10,000 or less per square meter
×: Gel and fish-eyes are greater than 10,000 per square meter

### (3) Analysis of impact strength

An impact strength of the polymer film was measured using an impact strength measuring device (TOYOSEIKI, Falling Dart tester) according to ASTM D1790-Method A. The impact strength was evaluated according to the following standards. The impact strength was measured using a polymer film having a thickness of 50 µm.

### <Standards for analysis of impact strength>

∘: Weight of the dropped weight is 96 g or more in the analysis according to ASTM D1790-Method A.
Δ: Weight of the dropped weight is 66 g or more and less than 96 g in the analysis according to ASTM D1790-Method A
×: The weight of the dropped weight is less than 66 g in the analysis according to ASTM D1790-Method A

### (4) Processability analysis (1) of polymer composition

When preparing the polymer pellets, rpm as a rotation speed of a strand cutter was measured. The uniformity was evaluated according to the following standards.

### <Standards for processability analysis (1)>

∘: Rpm of the strand cutter is 40 or more
Δ: Rpm of the strand cutter is 30 or more and less than 40
×: Rpm of the strand cutter is less than 30

### (5) Processability analysis (2) of polymer composition

When preparing the polymer pellets, a load applied to a twin-screw extruder was measured. The load was measured through a motor current and a motor torque, and was evaluated according to the following standards.

### <Standards for processability analysis (2)>

∘: Motor current is 20 A or more and 50 A or less, and motor torque is 100 N·m or less
Δ: Motor current is greater than 50 A, and motor torque is 100 N·m or less
×: Motor current is less than 20 A or greater than 50 A, and motor torque is greater than 100 N·m

Evaluation results according to the experimental examples are shown in Table 4 below.

**[TABLE 4]**

| Division | Oxygen permeability (cc/m²·day) | Gel and fish eye | Impact strength | Processability analysis (1) | Processability analysis (2) |
|---|---|---|---|---|---|
| Example 1 | 1.8 | ○ | ○ | Δ | Δ |
| Example 2 | 6.1 | ○ | ○ | Δ | Δ |
| Example 3 | 7.8 | Δ | Δ | Δ | Δ |
| Example 4 | 9.3 | × | × | Δ | × |
| Example 5 | 1.6 | ○ | ○ | Δ | Δ |
| Example 6 | 3.9 | ○ | ○ | Δ | Δ |
| Example 7 | 4.8 | ○ | Δ | Δ | Δ |
| Example 8 | 5.4 | Δ | Δ | Δ | × |
| Example 9 | 0.8 | × | × | Δ | × |
| Example 10 | 1.2 | ○ | ○ | Δ | Δ |
| Example 11 | 0.7 | ○ | ○ | Δ | Δ |
| Example 12 | 302 | × | Δ | Δ | Δ |
| Example 13 | 880 | × | × | Δ | × |
| Example 14 | 1736 | × | × | Δ | × |
| Example 15 | 1.9 | ○ | ○ | ○ | Δ |
| Example 16 | 2.1 | ○ | ○ | ○ | Δ |
| Example 17 | 4.8 | × | Δ | ○ | Δ |
| Example 18 | 4.3 | × | × | Δ | Δ |
| Example 19 | 5.2 | × | × | Δ | Δ |
| Example 20 | 1.8 | ○ | ○ | Δ | ○ |
| Example 21 | 1.8 | ○ | ○ | Δ | ○ |
| Example 22 | 2.2 | ○ | ○ | Δ | ○ |
| Example 23 | 3.5 | Δ | × | Δ | ○ |
| Example 24 | 12.8 | × | × | Δ | × |
| Example 25 | 1.9 | ○ | ○ | ○ | ○ |
| Comparative Example 1 | 11.2 | × | × | × | × |
| Comparative Example 2 | Impossible to process | | | | |
| Comparative Example 3 | 0.3 | ○ | Δ | × | × |
| Comparative Example 4 | 3100 | ○ | Δ | × | × |

Referring to Table 4 above, the processability of the polymer blend compositions according to the examples was improved, the oxygen transmission rate of the films manufactured of the polymer blend compositions was decreased, the number of gel-fish-eyes was reduced, and the impact strength was increased. Therefore, it was confirmed that a film having improved mechanical strength and gas barrier properties was manufactured.

The polymer compositions or polymer blend compositions according to the comparative examples were impossible to process or showed low processability. In addition, the films manufactured using the polymer compositions or polymer blend compositions according to the comparative examples showed low oxygen barrier properties, the high number of gel-fish-eyes/or low impact strength.

In Example 4, where the difference in the melt index between EVOH and EAA was relatively large, the number of gel-fish-eyes was relatively increased, and the impact strength was decreased.

In Example 8, the weight average molecular weight is on the low end of ranges that are preferred according to the present disclosure.

In Example 9, where the content of the acrylic acid in EAA was relatively low, the number of gel-fish-eyes was relatively increased and the impact strength was decreased.

In Examples 12 to 14, where the ratio of EAA was relatively high, the oxygen transmission rate was increased.

In Example 17, where the content of additive was relatively high, the number of gel-fish-eyes was increased.

In Examples 18 and 19, where ceramic additives were used, the number of gel-fish-eyes was relatively increased, the impact strength was decreased, and the processability was relatively decreased.

In Example 23, where the content of compatibilizer was relatively high, the impact strength was reduced.

In Example 24, a compatibilizer that does not include one or more of a polyolefin polymer, a (meth)acrylate polymer, a polymer grafted with maleic anhydride and maleic anhydride is used.

In the Processability analysis (2), in Examples 15 to 19 where additives were used, motor torque of the twin-screw extruder was within the appropriate range when preparing the polymer pellets, but motor current was somewhat high, resulting in relatively low processability.

In Examples 20 to 23 where methacrylate or maleic anhydride compatibilizers were used, and in Example 25 where both additives and compatibilizers were used, the twin-screw extruder showed normal operation when preparing polymer pellets, resulting in high processability.

In Comparative Examples 1 to 4, both motor current and motor torque were outside the appropriate range, resulting in low processability which could cause damage to the equipment.

## Claims

1. A polymer blend composition comprising:
an ethylene vinyl alcohol polymer, and
an ethylene (meth)acrylic acid polymer which comprises a (meth)acrylic acid in a content of 1% by weight or more and less than 10% by weight.

2. The polymer blend composition according to claim 1, wherein the content of the (meth)acrylic acid in the ethylene (meth)acrylic acid polymer is 5% by weight or more and less than 10% by weight (ASTM D4094).

3. The polymer blend composition according to claim 1 or 2, wherein a difference in a melt index between the ethylene vinyl alcohol polymer and the ethylene (meth)acrylic acid polymer is 10 g/10 min or less, preferably 7 g/10 min or less (ASTM D1238, 190°C, 2,16 kg).

4. The polymer blend composition according to claim 3, wherein the ethylene (meth)acrylic acid polymer has a melt index of 0.1 g/10 min to 20 g/10 min, preferably 1 g/10 min to 15 g/10 min, more preferably 3 g/10 min to 12 g/10 min, yet more preferably 5 g/10 min to 10 g/10 min (ASTM D1238, 190°C, 2,16 kg).

5. The polymer blend composition according to claim 3 or 4, wherein the ethylene vinyl alcohol polymer has a melt index of 0.1 g/10 min to 10 g/10 min preferably 0.8 g/10 min to 5 g/10 min, more preferably 1 g/10 min to 4 g/10 min (ASTM D1238, 190°C, 2,16 kg).

6. The polymer blend composition according to any one of claims 1 to 5, wherein the ethylene (meth)acrylic acid polymer has a weight average molecular weight of 50,000 g/mol to 150,000 g/mol, preferably 90,000 g/mol to 120,000 g/mol (ASTM D5296).

7. The polymer blend composition according to any one of claims 1 to 6, wherein the content of the ethylene (meth)acrylic acid polymer is 5% by weight or more and less than 40% by weight, preferably 8% by weight or more and less than 32% by weight based on a total weight of the polymer blend composition.

8. The polymer blend composition according to any one of claims 1 to 7, wherein a content ratio of the ethylene (meth)acrylic acid polymer relative to the ethylene vinyl alcohol polymer is in a range from 0.7 to 2.

9. The polymer blend composition according to any one of claims 1 to 8, further comprising an additive which comprises a basic inorganic compound.

10. The polymer blend composition according to claim 9, wherein a content of the additive is 0.01% by weight or more and less than 3.0% by weight, preferably 0.02% by weight or more and less than 2.0% by weight, more preferably 0.05% by weight or more and less than 1.0% by weight based on a total weight of the ethylene vinyl alcohol polymer and the ethylene (meth)acrylic acid polymer.

11. The polymer blend composition according to any one of claims 1 to 10, further comprising a compatibilizer which comprises one or more of a polyolefin polymer, a (meth)acrylate polymer, a polymer grafted with maleic anhydride and maleic anhydride.

12. The polymer blend composition according to claim 11, wherein a content of the compatibilizer is 0.1% by weight or more and less than 10% by weight, preferably 0.5% by weight or more and less than 7% by weight based on a total weight of the ethylene vinyl alcohol polymer and the ethylene (meth)acrylic acid polymer.

13. The polymer blend composition according to any one of claims 1 to 12, wherein a content of ethylene in the ethylene vinyl alcohol polymer is 15 mol% to 50 mol%.

14. A polymer pellet comprising the polymer blend composition according to any one of claims 1 to 13.

15. A polymer film comprising a polymer blend composition according to any one of claims 1 to 13.

## Amended claims

### Amended claims in accordance with Rule 137(2) EPC.

1. A polymer blend composition comprising:
an ethylene vinyl alcohol polymer, and
an ethylene (meth)acrylic acid polymer which comprises a (meth)acrylic acid in a content of 1% by weight or more and less than 10% by weight;
wherein a difference in a melt index between the ethylene vinyl alcohol polymer and the ethylene (meth)acrylic acid polymer is 10 g/10 min or less (ASTMD1238, 190°C, 2,16 kg).

2. The polymer blend composition according to claim 1, wherein the content of the (meth)acrylic acid in the ethylene (meth)acrylic acid polymer is 5% by weight or more and less than 10% by weight (ASTM D4094).

3. The polymer blend composition according to claim 1 or 2, wherein a difference in a melt index between the ethylene vinyl alcohol polymer and the ethylene (meth)acrylic acid polymer is 7 g/10 min or less (ASTM D1238, 190°C, 2,16 kg).

4. The polymer blend composition according to any one of claims 1 to 3, wherein the ethylene (meth)acrylic acid polymer has a melt index of 0.1 g/10 min to 20 g/10 min, preferably 1 g/10 min to 15 g/10 min, more preferably 3 g/10 min to 12 g/10 min, yet more preferably 5 g/10 min to 10 g/10 min (ASTM D1238, 190°C, 2,16 kg).

5. The polymer blend composition according to any one of claims 1 to 4, wherein the ethylene vinyl alcohol polymer has a melt index of 0.1 g/10 min to 10 g/10 min preferably 0.8 g/10 min to 5 g/10 min, more preferably 1 g/10 min to 4 g/10 min (ASTM D1238, 190°C, 2,16 kg).

6. The polymer blend composition according to any one of claims 1 to 5, wherein the ethylene (meth)acrylic acid polymer has a weight average molecular weight of 50,000 g/mol to 150,000 g/mol, preferably 90,000 g/mol to 120,000 g/mol (ASTM D5296).

7. The polymer blend composition according to any one of claims 1 to 6, wherein the content of the ethylene (meth)acrylic acid polymer is 5% by weight or more and less than 40% by weight, preferably 8% by weight or more and less than 32% by weight based on a total weight of the polymer blend composition.

8. The polymer blend composition according to any one of claims 1 to 7, wherein a content ratio of the ethylene (meth)acrylic acid polymer relative to the ethylene vinyl alcohol polymer is in a range from 0.7 to 2.

9. The polymer blend composition according to any one of claims 1 to 8, further comprising an additive which comprises a basic inorganic compound.

10. The polymer blend composition according to claim 9, wherein a content of the additive is 0.01% by weight or more and less than 3.0% by weight, preferably 0.02% by weight or more and less than 2.0% by weight, more preferably 0.05% by weight or more and less than 1.0% by weight based on a total weight of the ethylene vinyl alcohol polymer and the ethylene (meth)acrylic acid polymer.

11. The polymer blend composition according to any one of claims 1 to 10, further comprising a compatibilizer which comprises one or more of a polyolefin polymer, a (meth)acrylate polymer, a polymer grafted with maleic anhydride and maleic anhydride.

12. The polymer blend composition according to claim 11, wherein a content of the compatibilizer is 0.1% by weight or more and less than 10% by weight, preferably 0.5% by weight or more and less than 7% by weight based on a total weight of the ethylene vinyl alcohol polymer and the ethylene (meth)acrylic acid polymer.

13. The polymer blend composition according to any one of claims 1 to 12, wherein a content of ethylene in the ethylene vinyl alcohol polymer is 15 mol% to 50 mol%.

14. A polymer pellet comprising the polymer blend composition according to any one of claims 1 to 13.

15. A polymer film comprising a polymer blend composition according to any one of claims 1 to 13.
